# EUROPEAN PATENT APPLICATION

(11) **EP 1 397 955 A2**
(43) Date of publication of application: **17.03.2004**
(21) Application number: 03019404.7
(22) Date of filing: 27.08.2003
(51) Int. Cl.: A01G 3/08, B27B 17/00

(54) **Pole pruner**

(30) Priority: 12.09.2002 US 242170
(71) Applicant: Electrolux Home Products, Inc., Cleveland, Ohio 44135-0920 (US)
(72) Inventor: Verges, Sieglinde J., Texarkana, TX 75503 (US); Choate, Timothy W., Texarkana, TX 75503 (US)
(74) Representative: Klunker . Schmitt-Nilson . Hirsch

(57) **Abstract**

A pole pruner (10) that is lighter in weight than professional-grade pole pruners is provided, thereby making available a consumer-grade a pole pruner (10) that is lightweight, low in cost, and easy to use. Additionally, a pole pruner (10) according to one aspect of the present invention has a compact and contoured profile, thereby substantially preventing the pole pruner (10) from becoming lodged or ensnared in tree limbs or other vegetation. Further, a pole pruner (10) according to another aspect of the present invention includes a gear design (58) that reduces noise and produces less vibration than prior pole pruners.

## Description

### TECHNICAL FIELD OF THE INVENTION

The present invention relates generally to the field of lawn and garden tools and, more particularly, to a pole pruner.

### BACKGROUND OF THE INVENTION

Pruning trees and other types of vegetation is often a tiresome and dangerous task. For example, trees and other types of elevated vegetation may require the use of an elevated support. Additionally, the location of vegetation may require a great deal of physical exertion by a user of a cutting device to extend the cutting device to reach the vegetation. Extended pruners have been developed to alleviate some of the dangers inherent in vegetation trimming. However, extended pruners are generally heavy and cumbersome. Additionally, noise and vibration may result in difficulty in operating extended pruners.

### SUMMARY OF THE INVENTION

In accordance with the present invention, a pole pruner that is lighter in weight than professional-grade pole pruners is provided, thereby making available a consumer-grade a pole pruner that is lightweight, low in cost, and easy to use. Additionally, a pole pruner according to one aspect of the present invention has a compact and contoured profile, thereby substantially preventing the pole pruner from becoming lodged or ensnared in tree limbs or other vegetation. Further, a pole pruner according to another aspect of the present invention includes a gear design that reduces noise and produces less vibration than prior pole pruners. Additional aspects and advantages of the invention will be apparent from the following descriptions taken in connection with the accompanying drawings.

### BRIEF DESCRIPTION OF THE DRAWINGS

For a more complete understanding of the present invention and the advantages thereof, reference is now made to the following descriptions taken in connection with the accompanying drawings in which:

FIGURE 1 is a diagram illustrating an embodiment of a pole pruner;

FIGURES 2A and 2B are diagrams illustrating a view of an embodiment of a cutting head of the pole pruner illustrated in FIGURE 1;

FIGURES 3A and 3B are diagrams illustrating an exploded view of the cutting head illustrated in FIGURES 2A and 2B;

FIGURE 4 is a diagram illustrating a cross-sectional view of a portion of the cutting head illustrated in FIGURES 2 and 3 taken along the line 4-4 of FIGURE 2.

FIGURE 5 is a diagram illustrating a cross-sectional view of an embodiment of a gear assembly of the cutting head illustrated in FIGURES 2 and 3.

### DETAILED DESCRIPTION OF THE DRAWINGS

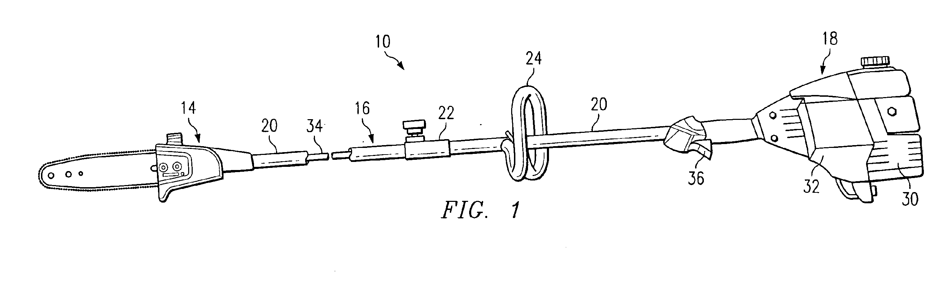

The preferred embodiments of the present invention and the advantages thereof are best understood by referring to FIGURES 1-5 of the drawings, like numerals being used for like and corresponding parts of the various drawings.

FIGURE 1 is a diagram illustrating a pole pruner 10. As illustrated in FIGURE 1, pole pruner 10 comprises a cutting head 14 coupled to a forward portion of a boom 16. A power supply 18 is coupled to a rearward portion of boom 16. In FIGURE 1, boom 16 comprises a plurality of boom units 20 joined together by a coupling 22. However, it should be understood that a single boom unit 20 may be used to form boom 16. A handle 24 is medially disposed along boom 16 to accommodate manipulation of pole pruner 10 during use. In the illustrated embodiment, power supply 18 comprises a gas-powered engine 30 disposed within a housing 32. Engine 30 outputs a rotational force to one or more drive shafts 34 disposed within boom 16. Housing 32 may also comprise a handle 36 for manipulating pole pruner 10 during use.

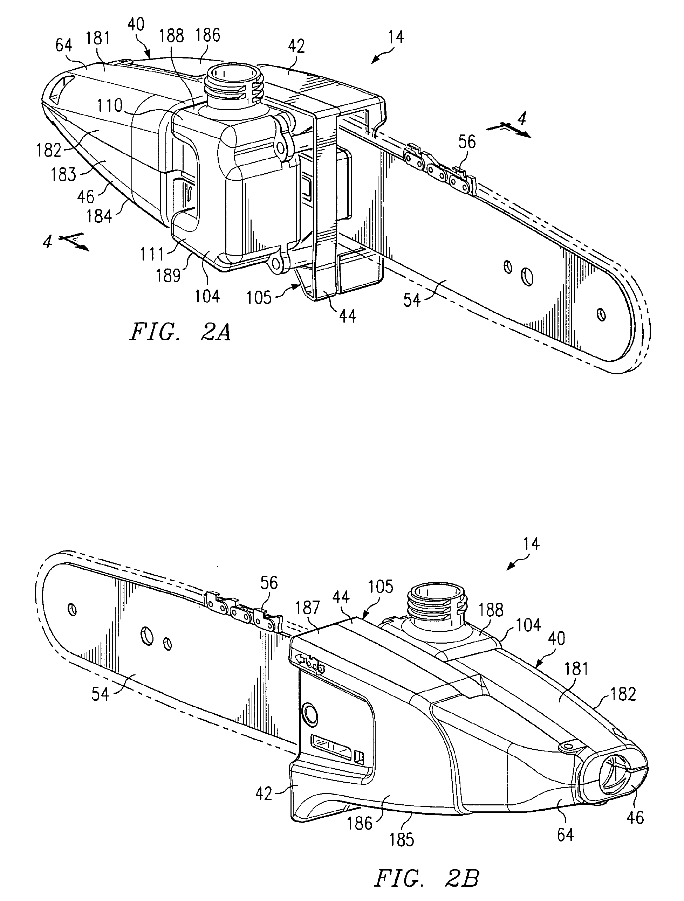

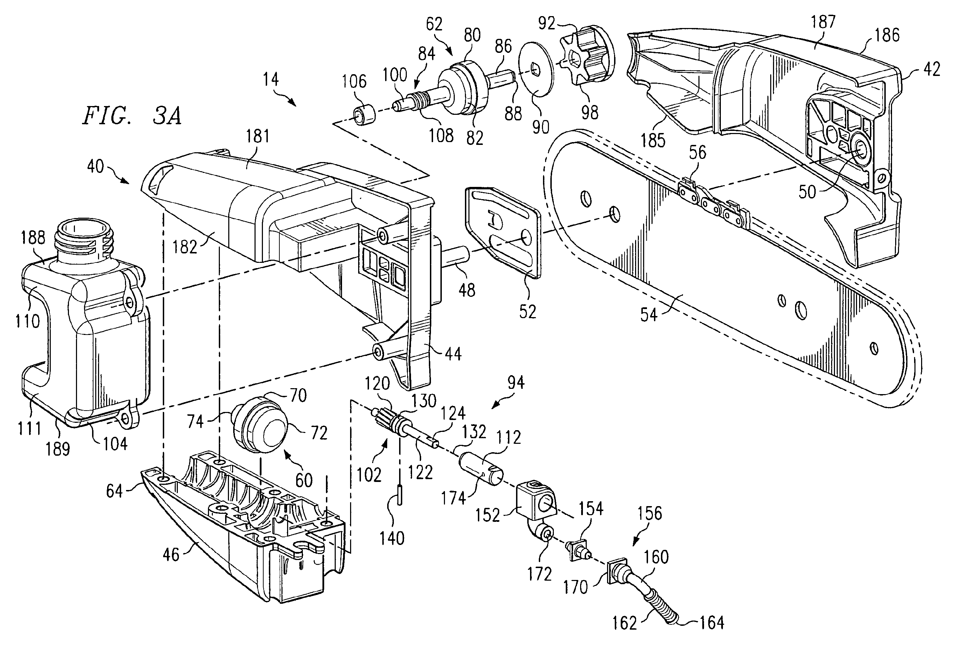

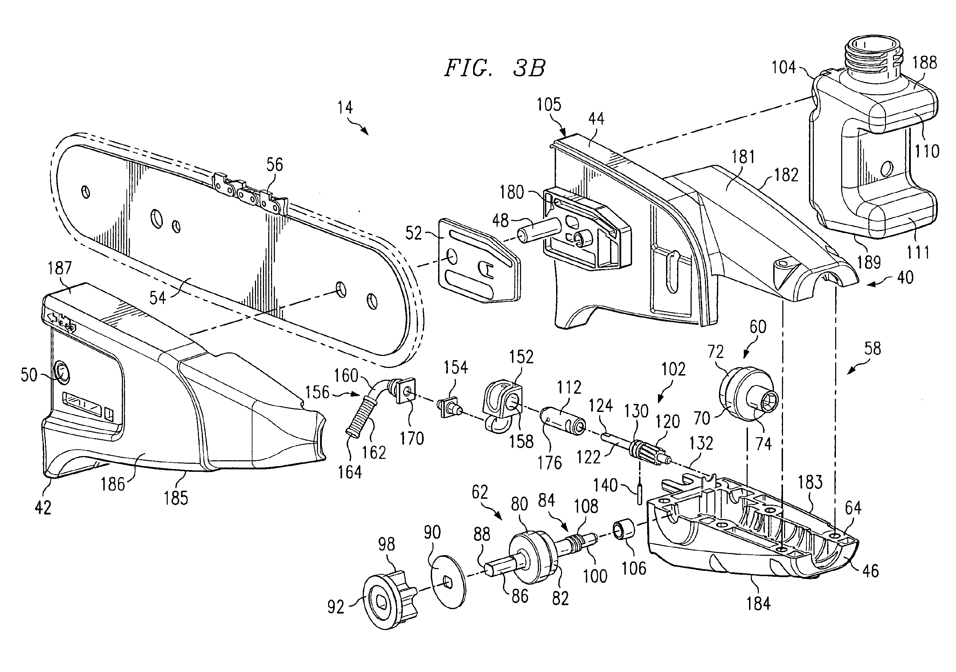

FIGURES 2 and 3 are diagrams illustrating an embodiment of cutting head 14. In the illustrated embodiment, cutting head 14 comprises a gear housing 40 formed by an upper housing portion 44 and a lower housing portion 46. Upper housing portion 44 comprises an outwardly extending hub 48 adapted to extend through an opening 50 disposed in a bar clamp or chain cover 42 to secure a bar pad bracket 52 and a chain guide 54 between chain cover 42 and upper housing portion 44. In operation, chain guide 54 supports rotation of cutting chain 56 about chain guide 54 for cutting vegetation.

Cutting head 14 also comprises a gear assembly 58 for communicating rotary power received from power supply 18 and/or boom 16 to cutting chain 56. In the illustrated embodiment, gear assembly 58 comprises an input gear assembly 60 and an output shaft gear assembly 62. Input gear assembly 60 is disposed at a rearward portion 64 of housing 40 and is adapted to receive the rotational force from a drive shaft 34 of boom 16. Input gear assembly 60 is coupled to output shaft gear assembly 62 for transmitting the rotational force to cutting chain 56. In operation, input gear assembly 60 may be directly coupled to a drive shaft 34 of boom 16 or may be otherwise coupled to boom 16 to receive the rotational force from a drive shaft 34 of boom 16. In the illustrated embodiment, input gear assembly 60 comprises a radial bearing 70 and an input bevel gear 72 disposed along an input shaft 74. Output shaft gear assembly 62 comprises a radial bearing 80 disposed outboard of an output bevel gear 82, and a worm gear 84 disposed inboard of the output bevel gear 82. The bearing 80, bevel gear 82 and worm gear 84 are disposed along an output shaft 86. Input gear assembly 60 and output shaft gear assembly 62 are disposed perpendicular to each other in the illustrated embodiment having gears 72 and 82 adapted to engage each other to transmit the rotational force from the drive shaft 34 of boom 16 to the cutting chain 56.

Upper housing portion 44 and lower housing portion 46 are formed having integral support surfaces adapted to support bearings 70 and 80 such that input gear assembly 60 and output shaft gear assembly 62 are disposed between upper housing portion 44 and lower housing portion 46. An outboard portion 88 of output shaft 86 extends through a washer 90 and into a sprocket 92. Sprocket 92 may be secured to output shaft 86 using a retainer clip or other type of coupling device (not explicitly shown). Cutting chain 56 engages teeth 98 of sprocket 92 such that rotation of output shaft gear assembly 62 relative to housing 40 correspondingly rotates and drives cutting chain 56 about chain guide 54.

Cutting head 14 also comprises an oil pump 94 for delivering oil to cutting chain 56. In the illustrated embodiment, oil pump 94 comprises a plunger assembly 102; however, it should be understood that other types of oil pumping mechanisms may be used. As best illustrated in FIGURES 3A and 3B, worm gear 84 is disposed near an inboard portion 100 of output shaft 86 for engaging plunger assembly 102. Plunger assembly 102 draws oil for lubrication of cutting chain 56 from a detachable oil reservoir 104 disposed near a forward portion 105 of housing 40 and attached to upper housing portion 44. A bearing 106 supports inboard portion 100 of output shaft 86. In the illustrated embodiment, worm gear 84 comprises a spring 108; however, other devices or structures may be used to form worm gear 84 or, alternatively, worm gear 84 may be integrally formed onto output shaft 86. Additionally, in the illustrated embodiment, oil reservoir 104 comprises a rearwardly extending upper portion 110 and a rearwardly extending lower portion 111 disposed about a portion of oil pump 94. For example, in the illustrated embodiment, a portion of oil pump 94 is disposed between portions 110 and 111, thereby protecting oil pump 94 from potential damage caused by vegetation.

Referring to FIGURES 3A and 3B, plunger assembly 102 is adapted to rotate and reciprocate within a barrel 112 to draw oil from oil reservoir 104. For example, in the illustrated embodiment, plunger assembly 102 comprises a gear 120 adapted to engage worm gear 84 to rotate plunger assembly 102 relative to barrel 112. A shaft 122 of plunger assembly 102 extends forwardly from gear 120 into barrel 112. Shaft 122 comprises an integrally formed scoop portion 124 such that rotation of shaft 122 within barrel 112 causes scoop portion 124 to draw oil about an internal periphery of barrel 112. To obtain reciprocation of plunger assembly 102 relative to barrel 112, plunger assembly 102 comprises an irregularly shaped groove 130 adapted to engage a stationary pin 140. For example, in the illustrated embodiment, groove 130 is disposed at a non-perpendicular angle relative to an axis 132 of plunger assembly 102. In operation, groove 130 engages pin 140 disposed in a fixed position within housing 40 such that in response to rotational movement of plunger assembly 102 about axis 132, plunger assembly 102 reciprocates along axis 132 corresponding to the position of groove 130 relative to pin 140. Pin 140 may comprise a discrete structural component within housing 40 or may comprise an integrally formed structure of housing 140.

In FIGURES 3A and 3B, barrel 112 is coupled to an oil block 152. Oil block 152 is coupled to a fitting 154 and an oil pickup assembly 156 extending into oil reservoir 104. Barrel 112 is disposed within an opening 158 of oil block 152. Oil pickup assembly 156 comprises a tube 160 disposed within oil reservoir 104 and a filter element 162 disposed over a portion of tube 160 to filter oil entering tube 160. A plug 164 is disposed at a distal end of tube 160 to prevent oil from entering tube 160 from bypassing filter 162. A fitting 170 of oil pickup assembly 156 engages fitting 154 such that a wall of oil reservoir 104 is disposed between fitting 170 and fitting 154. Seals or other members may be used about fittings 154 and 170 to prevent oil from leaking around fittings 154 and 170. Thus, in operation, fitting 154 extends through an opening in a wall of oil reservoir 104 and into corresponding fitting 170. An opposite end of fitting 154 engages an opening 172 of oil block 152. Oil block 152 retains the oil drawn from reservoir 104 until the oil is distributed via plunger assembly 102, thereby preventing the oil from entering undesired portions of housing 40.

In operation, rotation of output shaft gear assembly 62 causes engagement of worm gear 84 with gear 120 of plunger assembly 102, thereby causing rotation of plunger assembly 102 about axis 132. During rotation of plunger assembly 102 about axis 132, interaction of pin 140 with groove 130 causes reciprocation of shaft 122 within barrel 112. As plunger assembly 102 reciprocates rearwardly or outwardly relative to barrel 112, vacuum pressure within barrel 112 draws oil from oil reservoir 104 through oil pickup assembly 156. Oil is then drawn into barrel 112 from oil pickup assembly 156 and into oil block 152 via an opening 174 in a wall of barrel 112. As plunger assembly 102 continues rotating within barrel 112, scoop portion 124 of shaft 122 draws the oil about the internal periphery of barrel 112. Additionally, as plunger assembly 102 reciprocates forwardly or inwardly within barrel 112, shaft 122 compresses the oil disposed within barrel 112 and forces the oil outwardly from within barrel 112 via an opening 176 in a wall of barrel 112.

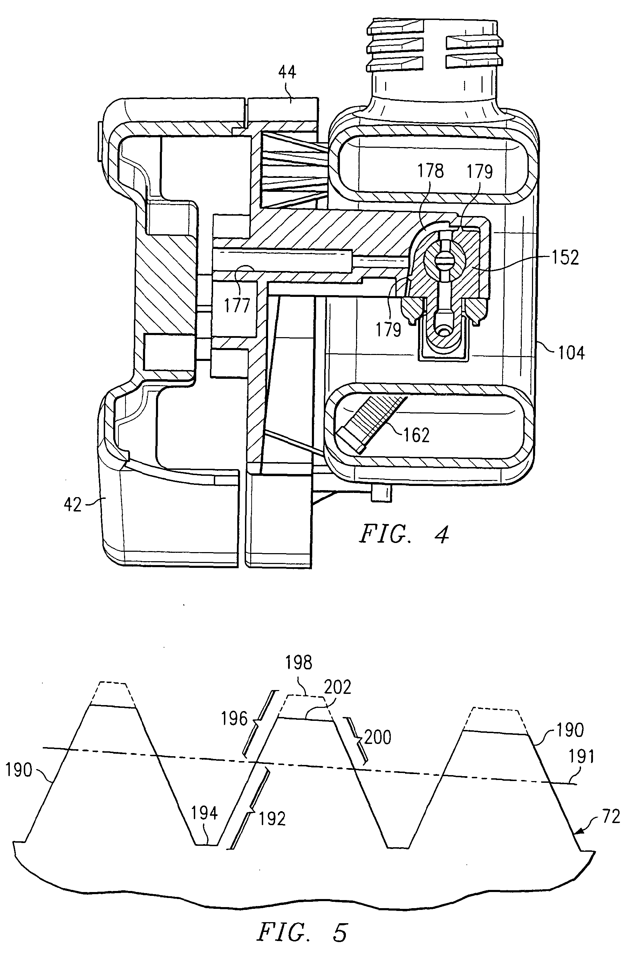

FIGURE 4 is a diagram illustrating a cross-sectional view of a portion of cutting head 14 taken along the line 4-4 of FIGURE 2A. As illustrated in FIGURE 4, upper housing portion 44 comprises an integrally formed channel 177 for delivering oil from oil block 152 to cutting chain 56. For example, upper housing portion 44 comprises an integrally formed recess area 178 formed at an outboard end of channel 177 and adapted to receive oil block 152. Oil block 152 comprises a sealing member 179 adapted to form a seal between oil block 152 and recess area 178 to substantially prevent oil from exiting channel 177 around oil block 152. Sealing member 179 may comprise an integrally formed member of oil block 152 or may be a separate and discrete member. Referring to FIGURE 3B, channel 177 transitions into a longitudinally extending outlet 180 as channel 177 extends inwardly toward cutting chain 56. Thus, in accordance with the present invention, oil is delivered to cutting chain 56 via channel 177 formed in upper housing portion 44, thereby alleviating a requirement of a separate oil line or tube leading to cutting chain 56.

Referring to FIGURES 2 and 3, cutting head 14 is configured having a contoured profile converging inwardly to substantially prevent pole pruner 10 from becoming lodged or ensnared by tree limbs or other vegetation during use. For example, an upper surface 181 and a side surface 182 of upper housing portion 44 converge inwardly as surfaces 181 and 182 extend toward rearward portion 64 of housing 40. Additionally, a side surface 183 and a lower surface 184 of lower housing portion 46 also converge inwardly as surfaces 183 and 184 extend toward rearward portion 64 of housing 40. Further, a lower surface 185, a side surface 186, and an upper surface 187 of chain cover 42 each converge inwardly as surfaces 185, 186 and 187 extend rearwardly toward boom 16. Thus, housing portions 44 and 46 and chain cover 42 are configured having a contoured profile such that the assembled portions converge inwardly toward rearward portion 64 as portions 44 and 46 and chain cover 42 extend toward rearward portion 64. Thus, when extracting cutting head 14 from vegetation, the converging profile of cutting head 14 substantially reduces the likelihood of the cutting head 14 becoming lodged or ensnared by the vegetation.

Additionally, oil reservoir 104 is located on cutting head 14 in a position to avoid entanglement of the cutting head 14 by vegetation. For example, in the illustrated embodiment, oil reservoir 104 is disposed toward forward portion 105 of housing 40 and forward of upper housing portion 44. Thus, when drawing cutting head 14 away from vegetation, upper housing portion 44 shields oil reservoir 104 from the vegetation, thereby allowing cutting head 14 to be easily withdrawn from the vegetation and reducing the likelihood that oil reservoir 104 will cause cutting head 14 to become ensnared by the vegetation. Further, oil reservoir is configured having a profile coincident with the profile of upper housing portion 44 and lower housing portion 46 to further reduce the likelihood of cutting head 14 becoming ensnared by the vegetation upon withdrawal of cutting head 14 from vegetation. For example, as best illustrated in FIGURES 2 and 3, oil reservoir comprises an upper surface 188 curving or sloping downwardly coincident with surface 181 of upper housing portion 42 and a lower surface 189 curving or sloping sloping upwardly coincident with surface 184 of lower housing portion 44. Thus, oil reservoir 104 is configured having tapered surfaces 188 and 189 that converge towards each other to form a reduced profile as the profile extends rearwardly.

FIGURE 5 is a diagram illustrating an embodiment of input gear 72 and output gear 82. For ease of description, only input gear 72 is illustrated and described. However, it should be understood that the description corresponding to FIGURE 4 and input gear 72 applies also to output gear 82.

As illustrated in FIGURE 5, input gear 72 comprises a plurality of teeth 190 for engaging corresponding teeth of output gear 82. Teeth 190 of input gear 72 are formed having a pitch circle indicated generally at 191 and a tooth dedendum indicated generally at 192 extending from the pitch circle 191 to a bottom land 194 of input gear 72. Using standard or conventional gear design principles, a tooth addendum indicated generally at 196 extends from a standard or conventional location of a top land indicated generally at 198 to pitch circle 191. In accordance with the present invention, however, input gear 72 is configured having a reduced addendum indicated generally at 200 from standard gearing design principles, thereby forming top land 202. For example, in the illustrated embodiment, the reduced addendum 200 of input gear 72 is formed offset a predetermined distance from standard gearing top land 198 and parallel to top land 198. In this embodiment, top land 202 is offset from standard gearing top land 198 by approximately 0.011 inches to form reduced addendum 200 to reduce noise and vibration associated with interaction of gears 72 and 82; however, it should be understood that other dimensional offsets may be used to form reduced addendum 200. For example, as plastic or other lightweight materials are used to form components such as housing 40, factors such as the type of material, heating and cooling properties affecting expansion and contraction of the material, cycle times, and wall thickness may affect the operating conditions of gears 72 and 82. Thus, reduced addendum 200 generates an additional clearance between gears 72 and 82 to reduce noise and vibration during operation of device 10.

## Claims

1. A pole pruner, comprising:
a rotary power supply;
a boom coupled at one end to the rotary power supply;
a cutting head coupled at an end of the boom opposite the rotary power supply, the boom adapted to communicate rotary power from the rotary power supply to the cutting head, the cutting head comprising:
a housing;
an input gear coupled to the housing and adapted to receive rotary power from the boom; and
an output gear coupled to the input gear and adapted to transfer the rotary power to a sprocket, the sprocket coupled to a cutting chain, the input gear and the output gear each formed having a reduced addendum relative to standard gearing.

2. The device of Claim 1, wherein the input gear and the output gear each comprise a bevel gear.

3. The device of Claim 1, wherein the addendum of each of the input gear and the output gear is reduced by at least 0.010 inch relative to standard gearing.

4. The device of Claim 1, wherein the addendum of the input gear is reduced proportionately to the addendum of the output gear.

5. The device of Claim 1, wherein the input gear and the output gear are each reduced parallel to a standard gearing land area of the respective input and output gear.

6. The device of Claim 1, wherein the output gear is coupled to an oil pump for delivering oil to the chain.

7. The device of Claim 8, wherein the oil pump comprises a plunger assembly.

8. The device of Claim 1, further comprising a detachable oil reservoir.

9. The device of Claim 1, further comprising a channel disposed in the housing and adapted to direct oil to the chain.

10. A pole pruner, comprising:
a rotary power supply;
a boom coupled at one end to the rotary power supply;
a cutting head coupled at an end of the boom opposite the rotary power supply, the boom adapted to communicate rotary power from the rotary power supply to the cutting head, the cutting head comprising:
an input gear assembly adapted to receive rotary power from the boom;
an output shaft gear assembly coupled to the input gear assembly and adapted to communicate rotary power from the input gear assembly to a sprocket;
a cutting chain coupled to the sprocket;
an oil pump adapted to engage the rotary power to draw oil from a reservoir; and
a gear housing having an integrally formed channel adapted to deliver the oil from the oil pump to the cutting chain.

11. The pruner of Claim 10, wherein the oil pump is coupled to the output shaft gear assembly.

12. The pruner of Claim 10, wherein the gear housing comprises:
a lower housing portion; and
an upper housing portion, the channel formed in the upper housing portion.

13. The pruner of Claim 10, wherein the oil pump is disposed outside of the reservoir.

14. The pruner of Claim 10, wherein the oil reservoir comprises a tapered profile.

15. The pruner of Claim 10, wherein the channel transitions into a longitudinally extending passage disposed proximate to the cutting chain.

16. The pruner of Claim 10, wherein at least a portion of the oil reservoir is disposed around the oil pump.

17. A pole pruner, comprising:
a rotary power supply;
a boom coupled at one end to the rotary power supply;
a cutting head coupled at an end of the boom opposite the rotary power supply, the boom adapted to communicate rotary power from the rotary power supply to the cutting head, the cutting head comprising:
a cutting chain;
a gear assembly adapted to communicate the rotary power to the cutting chain;
an oil reservoir disposed forwardly of the gear assembly and to one side of the cutting chain; and
an oil pump disposed outside of the oil reservoir and adapted to draw oil from the oil reservoir for delivery to the cutting chain, the oil pump disposed between the oil reservoir and the gear assembly.

18. The pruner of Claim 17, wherein the oil pump comprises a plunger assembly.

19. The pruner of Claim 17, wherein the cutting head further comprises a gear housing, the gear housing having an integrally formed channel adapted to direct the oil from the oil pump to the cutting chain.

20. The pruner of Claim 19, wherein the gear housing comprises:
an upper portion; and
a lower portion coupled to the upper portion, the channel disposed in the upper portion.

21. The pruner of Claim 17, wherein the cutting head comprises a profile converging inwardly as the profile extends rearwardly toward the boom to facilitate extraction of the cutting head from vegetation.

22. The pruner of Claim 17, wherein the oil reservoir comprises a profile converging inwardly to facilitate extraction of the cutting head from vegetation.

23. A pole pruner, comprising:
a power supply;
a boom coupled to one end to the power supply; and
a cutting head coupled to an end of the boom opposite the power supply, the boom adapted to communicate a rotational force from the power supply to the cutting head, the cutting head adapted to communicate the rotational force to a cutting chain, the cutting head configured having at least one surface converging inwardly as the profile extends toward the boom to facilitate extraction of the cutting head from vegetation.

24. The pruner of Claim 23 further comprising a detachable oil reservoir coupled to the cutting head.

25. The pruner of Claim 23, wherein the cutting head comprises a housing having an integrally formed channel adapted to transfer oil from an oil reservoir to the cutting chain.

26. The pruner of Claim 23, wherein the boom comprises a plurality of boom units coupled together.

27. The pruner of Claim 23, wherein the cutting head comprises an oil pump adapted to draw oil from an oil reservoir and transmit the oil to the cutting chain, wherein at least a portion of the oil reservoir is disposed about at least a portion of the oil pump.

28. The pruner of Claim 23, wherein the at least one surface comprises:
at least one surface of a gear housing; and
at least one surface of a chain cover.

29. The pruner of Claim 23, wherein the at least one surface comprises:
an upper surface of a gear housing;
a lower surface of the gear housing; and
a side surface of the gear housing.

30. The pruner of Claim 23, further comprising an oil reservoir coupled to the cutting head and having at least one tapered surface to facilitate extraction of the cutting head from vegetation.

31. The pruner of Claim 23, further comprising an oil reservoir having a plurality of spaced apart reservoir portions extending rearwardly.

32. The pruner of Claim 31, wherein at least a portion of the oil pump is disposed between the rearwardly extending reservoir portions.
